(19) **Europäisches Patentamt**
**European Patent Office**
**Office européen des brevets**

(11) **EP 4 377 032 B1**

(12) **EUROPÄISCHE PATENTSCHRIFT**

(45) Veröffentlichungstag und Bekanntmachung des Hinweises auf die Patenterteilung:
**11.06.2025 Patentblatt 2025/24**

(21) Anmeldenummer: **22760667.0**

(22) Anmeldetag: **27.07.2022**

(51) Internationale Patentklassifikation (IPC):
**B33Y 40/20** (2020.01)  **B22F 12/30** (2021.01)
**B22F 10/22** (2021.01)  **B23K 9/04** (2006.01)
**B23K 15/00** (2006.01)  **B23K 26/342** (2014.01)
**B29C 64/245** (2017.01)  **B33Y 30/00** (2015.01)

(52) Gemeinsame Patentklassifikation (CPC):
(C-Sets verfügbar)
**B22F 12/30; B22F 10/22; B23K 9/04;**
**B23K 15/0086; B23K 26/342; B29C 64/245;**
**B33Y 30/00; B33Y 40/20;** B22F 2999/00;
B33Y 10/00                    (Forts.)

(86) Internationale Anmeldenummer:
**PCT/EP2022/071061**

(87) Internationale Veröffentlichungsnummer:
**WO 2023/006810 (02.02.2023 Gazette 2023/05)**

(54) **VERBESSERTES VERFAHREN ZUR HERSTELLUNG EINES BAUTEILS MITTELS ADDITIVER FERTIGUNG**

IMPROVED METHOD FOR PRODUCING A COMPONENT BY MEANS OF ADDITIVE MANUFACTURING

PROCÉDÉ PERFECTIONNÉ DE PRODUCTION D'ÉLÉMENT À L'AIDE DE FABRICATION ADDITIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.07.2021 DE 102021208164**

(43) Veröffentlichungstag der Anmeldung:
**05.06.2024 Patentblatt 2024/23**

(73) Patentinhaber: **RWTH Aachen**
**52062 Aachen (DE)**

(72) Erfinder:
• **OSTER, Lukas**
**52062 Aachen (DE)**
• **MANN, Samuel**
**52078 Aachen (DE)**
• **REISGEN, Uwe**
**52249 Eschweiler (DE)**

(74) Vertreter: **RCD-Patent**
**Giesen, Schmelcher & Griebel**
**Patentwanwälte PartG mbB**
**Postfach 3106**
**52118 Herzogenrath (DE)**

(56) Entgegenhaltungen:
DE-A1- 102018 127 311    US-A1- 2018 272 609

• **BAQERZADEH CHEHREH ABOOTORAB ET AL: "Influence of Different Alloying Strategies on the Mechanical Behavior of Tool Steel Produced by Laser-Powder Bed Fusion", MATER, vol. 14, no. 12, 17 June 2021 (2021-06-17), pages 3344, XP093055338, ISSN: 1996-1944, Retrieved from the Internet <URL:https://www.ncbi.nlm.nih.gov/pmc/ivip/1996-1944/14/12/3344> DOI: 10.3390/ma14123344**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

• KROMM A ET AL: "Properties and weldability of modified low transformation temperature filler wires", WELDING IN THE WORLD,, vol. 59, no. 3, May 2015 (2015-05-01), pages 413 - 425, XP001595595, DOI: 10.1007/S40194-014-0215-Y
• KROMM ARNE KANNENGIESSER THOMAS: "Characterizing phase transformations of different LTT alloys and their effect on residual stresses and cold cracking", WELDING IN THE WORLD, SPRINGER, DE, vol. 55, no. 3-4, March 2011 (2011-03-01), pages 48 - 56, XP001560590, ISSN: 0043-2288
• CHEN WEI ET AL: "Control of residual stress in metal additive manufacturing by low-temperature solid-state phase transformation: An experimental and numerical study", ADDITIVE MANUFACTURING, vol. 42, June 2021 (2021-06-01), NL, pages 102016, XP055975822, ISSN: 2214-8604, Retrieved from the Internet <URL:https://www.sciencedirect.com/science/article/pii/S2214860421001810/pdfft?md5=93e0d6f31a5a66a1508e446899832b1e&pid=1-s2.0-S2214860421001810-main.pdf> [retrieved on 20221028], DOI: 10.1016/j.addma.2021.102016

(52) Gemeinsame Patentklassifikation (CPC): (Forts.)

C-Sets
B22F 2999/00, B22F 12/30, B22F 12/20, B22F 2201/02, B22F 2202/03

**Beschreibung**

Die Erfindung betrifft ein verbessertes Verfahren zur Herstellung eines Bauteils, insbesondere eines metallischen Bauteils, mittels additiver Fertigung und ein metallisches Substrat zur Verwendung in einem solchen Verfahren.

Hintergrund

Additive Fertigung, die üblicherweise auch als 3D-Druck oder generative Fertigung bezeichnet wird, gewinnt in der Industrie zunehmend an Bedeutung. Insbesondere im Prototypenbau, bei Bauteilen mit hohem Individualisierungsgrad oder Bauteilen mit einer komplizierten Geometrie finden diese Fertigungsverfahren Anwendung. Doch auch in der Fertigung von Endprodukten wächst der Umfang, in welchem additive Fertigung angewendet wird. Insbesondere in der Luft- und Raumfahrt, dem medizinischen Bereich (Prothetik), der Automobilbranche und dem Werkzeugbau finden diese Verfahren Anwendung, da in diesen Branchen Anforderungen an die Bauteile gestellt werden, welche die generative Fertigung begünstigen.

Bei additiven Fertigungsverfahren wird durch lagenweises Auftragen von Material ein Bauteil erzeugt. Eine Besonderheit und großer Vorteil solcher generativen Fertigungsverfahren ist, dass der Fertigungsprozess werkzeuglos und ohne Formen direkt auf Grundlage von Computergenerierten Vorlagen, beispielsweise 3D-CAD-Daten erfolgt. Dies erhöht gegenüber der herkömmlichen Fertigungsverfahren die Flexibilität in der Fertigung. Eine schnelle Fertigung von Prototypen (rapid prototyping), von Endprodukten (rapid manufacturing) und von Werkzeugen und Formen (rapid tooling) ist möglich. Mit verschiedenen additiven Fertigungsverfahren können unterschiedlichste Materialien, Werkstoffe, verarbeitet werden, wie zum Beispiel Kunststoffe, Keramiken und Metalle.

Ein weiterer Vorteil der additiven Fertigung ist, dass der Fertigungsprozess gewöhnlich automatisiert abläuft. Nur das Vorbereiten der Maschine und das Entnehmen des Bauteils, die Trennung von einem verwendeten Substrat, beispielsweise einer Bauplatte, sowie eine mögliche Nachbehandlung, müssen gewöhnlich manuell erfolgen. Insbesondere die Trennung des Bauteils vom Substrat kann dabei unter Umständen sehr aufwendig sein.

Bei den pulverbettbasierten additiven Fertigungsverfahren wird ein pulverförmiger Werkstoff in einer dünnen Schicht auf eine Arbeitsfläche, beispielsweise eine Substratplatte aufgebracht. Mittels eines Energiestrahls, insbesondere eines Laserstahls oder eines Elektronenstrahls, wird das Material nach einer rechnergestützten Vorlage punktgenau aufgeschmolzen oder aufgesintert. Das aufgeschmolzene bzw. aufgesinterte Material bildet beim Wiedererstarren eine feste Kontur aus, die mit zuvor und/oder nachfolgend auf gleiche Weise hergestellten Konturen zu einem Werkstück zusammengefügt wird. Auf diese Weise können insbesondere Formkörper aufgebaut werden, die eine teilweise hochkomplexe dreidimensionale Struktur aufweisen. Pulverbasierte generative Fertigungsverfahren sind beispielsweise Elektronenstrahlschmelzen (EBM), selektives Laserstrahlschmelzen (SLM) oder selektives Lasersintern (SLS).

Beim Pulverspritzverfahren zum additiven Fertigen von Bauteilen wird ein pulverförmiger Werkstoff mittels eines Trägergases auf ein Substrat aufgetragen und durch einen Energiestrahl aufgeschmolzen. Als Energiestrahl kommt dabei in der Regel ein Plasmastrahl (Plasma-Pulver-Auftragsschweißen) oder ein Laserstrahl (Laser-Metallauftragen, LMD) zum Einsatz.

Pulverbasierte generative Fertigungsverfahren auf Metallbasis finden zum Schutz vor Umgebungseinflüssen, beispielsweise Oxidation, meist unter Schutzgas oder im Vakuum statt. Nach Beendigung der Fertigung muss das Bauteil abkühlen. Sofern ein Schutzgas zum Einsatz kommt, kann dieses in den Prozess der Abkühlung unterstützend eingesetzt werden; bei additiven Fertigungsverfahren, die unter Vakuum durchgeführt werden, muss das gefertigte Bauteil gekühlt und die zuvor evakuierte Strahlkammer mit einem Gas auf Umgebungsdruck geflutet werden. Die Strahlkammer kann beispielsweise mit einem Inertgas, beispielsweise Helium geflutet werden, was gleichzeitig zu einer Abkühlung des Bauteils auf Umgebungstemperatur genutzt werden kann.

Weiterhin haben sich drahtbasierte additive Fertigungsverfahren etabliert. Bei diesen Verfahren wird ein Metalldraht mittels einer Energiequelle aufgeschmolzen und zum schichtweisen Aufbau des Bauteils eingesetzt. Die Eigenschaften des gefertigten Bauteils werden dabei wesentlich durch die Wahl des Metalls bzw. der Metalllegierung des eingesetzten Drahts bestimmt. Als Energiequelle können hier Laserstrahlen, Elektronenstrahlen oder Lichtbogen (Wire Arc Additive Manufacturing, WAAM) zum Einsatz kommen.

Das sogenannten Wire Arc Additive Manufacturing (WAAM, Lichtbogendrahtauftragschweißen) nutzt Lichtbogenschweißen zum schichtweisen Aufbau des Bauteils. Hierbei werden kontinuierlich geförderter drahtförmiger Schweißzusatz und Substratplatte mit Hilfe eines elektrischen Lichtbogens als Wärmequelle aufgeschmolzen. Der Schweißzusatz geht im Wirkbereich des Lichtbogens (Prozesszone), meist in Tropfenform, ins Schmelzbad der Substratplatte über und bildet nach Erstarren eine Schweißraupe. Durch Bewegen des Schweißbrenners und des Drahtes kann entlang eines vorgegebenen Pfades eine beliebigen Kontur Material aufgetragen werden. So lassen sich schnell auch großformatige Metallbauteile erzeugen, die im Anschluss, beispielsweise durch CNC-Fräsen fertig nachbearbeitet werden können. Der Schweißprozess, üblicherweise Metall-Schutzgas-Schweißen, Plasmaschweißen oder Wolfram-Inertgas-Schweißen, ist grundsätzlich bekannt und lässt sich, beispielsweise in Kombination mit einer 5-Achs-Steuerung, für komplexe Bauteilgeometrien einsetzen. Als Materialien für den Bauteilaufbau können alle schweißbaren Drähte wie zum Beispiel Stahl, Aluminium, NE-Metalle oder Ni- und Ti-Legierungen eingesetzt werden. Viele bereits zertifizierte Drähte stehen bereits jetzt für den Einsatz als Ausgangsmaterial im WAAM zur Verfügung.

Technische Werkstoffe auf Basis von Eisen die beispielsweise in Drahtform in der additiven Fertigung auf Metallbasis eingesetzt werden, können in Abhängigkeit ihrer Legierungselemente und der vorherrschenden Temperatur in verschiedenen Kristallgittermodifikationen (Phasen) vorliegen (Polymorphie). Diese Modifikationen weisen unter anderem unterschiedliche Volumina auf. Beim Abkühlen und Aufheizen kann ein Werkstoff demnach unterschiedliche Phasenumwandlungen und damit Volumenänderungen durchlaufen. Von besonderem Interesse für die Beeinflussung von Eigenspannungen beispielsweise bei Chrom-Nickel-legierten Stählen ist die Phasenumwandlung Austenit-Martensit, welche mit einer Volumenvergrößerung einhergeht. Der Werkstoff erstarrt austenitisch und beginnt beim Erreichen der Martensitstarttemperatur (Ms) mit der martensitischen Phasenumwandlung, welche beim Erreichen der Martensitfinishtemperatur (Mf) abschließt. Diese Phasenumwandlung findet in gängigen Legierungssystemen bei Temperaturen oberhalb von 500 °C statt, sodass die Volumenänderung durch plastische Verformung des erweichten Materials kompensiert werden kann.

Sogenannte Low Transformation Temperature (LTT)-Legierungen zeichnen sich dadurch aus, dass durch Anpassung der Legierungselemente eine Verschiebung der Ms-Temperatur hin zu niedrigeren Temperaturen erreicht wird, sodass eine Kompensation der Volumenänderung durch plastische Verformung erschwert wird und es stattdessen zu einem Aufbau von Eigenspannungen kommt. Durch die Volumenänderung während der Martensitumwandlung werden Druckspannungen induziert, die den thermischen Schrumpfspannungen entgegenwirken (LTT-Effekt). Dieser Mechanismus wird bereits beim Verbindungsschweißen zur Reduktion der Schweißeigenspannungen genutzt. Hierbei wird die Ms-Temperatur so eingestellt, dass die Umwandlung bei Raumtemperatur gerade vollständig abgeschlossen ist und die maximale Volumenvergrößerung erreicht wird. Gleichermaßen werden LTT Legierungen beispielsweise auch als Zusatzmaterial in Elektronenstrahl- oder Lichtbogenschweißprozessen beim Aufbau von Bauteilen eingesetzt Die Volumenexpansion, der sogenannte LTT-Effekt wirkt der Volumenschrumpfung während der Abkühlung der hergestellten Bauteile auf Raumtemperatur entgegen und bewirkt so eine Reduktion von Spannungsbelastungen und Verzug in den Bauteilen.

Die US 2019/01600 595 A1 beschreibt die Ausnutzung des vorstehend beschriebenen LLT-Effekts in einem Verfahren der additiven, endkonturnahen Fertigung und Cr/Ni-reiche Materialzusammensetzungen hierfür mit einer niedrigen LTT-Temperatur im Bereich von 150°C bis 300 °C. Hierbei wird also ausgenutzt, dass die martensitische Volumenexpansion den auftretenden Schrumpfspannungen im Werkstück entgegenwirkt und so eine möglichst konturnahe Fertigung erfolgen kann.

Die beiden Veröffentlichungen von Kromm et al. "Properties and weldability of modified Low transformation temperature filler wires", WELDING IN THE WORLD, Bd- 59, Nr.3, 1. Mai 2015, Seiten 413-425; und "Characterizing phase transformations of different LTT alloys and their effect on residual stresses and cold cracking", beschreiben die Analyse und die Eigenschaften verschiedener LTT Legierungen. Diese LTT-Legierungen werden für die Verwendung als Füllermaterialien für additive Schweißverfahren entwickelt, mit dem Zweck, dass die martensitische Volumenexpansion dieses Füllermaterials den auftretenden Schrumpfspannungen im gefertigten Werkstück entgegenwirkt. Zu diesem Zweck werden bei Kromm et al. LTT-Legierungen angestrebt, die eine Martensitstarttemperatur Ms zwischen 150° und 300 °C aufweisen.

In der additiven Fertigung von metallischen Bauteilen wird das Material zum Aufbau üblicherweise auf eine artgleiche metallische Substratplatte aufgetragen. Diese muss anschließend entweder aufwändig substraktiv entfernt werden oder sie wird in das Bauteil integriert. Im letzteren Fall weist sie üblicherweise andere mechanisch-technologische Eigenschaften als das aufgetragene Material auf.

Die DE 10 2019 115 770 A1 beschreibt eine Trägerplatte für die additive Fertigung, wobei die Trägerplatte zur Entsorgung nach der Fertigung vorgesehen ist, aber eine Kostensenkung im Verfahren, durch Verwendung eines billigeren Materials, beispielsweise Baustahl oder Gusseisen, für den Basis-Substratkörper der Trägerplatte, erzielt werden soll. Auf diesem Basiskörper ist zur Herstellung der Artgleichheit eine Grenzfläche (Kooperationsabschnitt) aus einem Material vorgesehen, welches mit dem Material für das Werkstück in der additiven Fertigung gut verschmelzbar ist. Dennoch muss die Trägerplatte nach der additiven Fertigung substraktiv entfernt und entsorgt werden. Der zunehmend wichtiger werdende Aspekt der Nachhaltigkeit und Ressourcen-schonender Verfahrensweise wird somit nicht ausreichend berücksichtigt.

Einen anderen Ansatz verfolgt die US2018/0272609 A1 die eine Trägerstruktur, insbesondere eine Substratplatte für die additive Fertigung beschreibt, sowie ein Verfahren zur additiven Fertigung in dem diese eingesetzt wird. Die Trägerstruktur umfasst dabei zwingend eine Grenzflächenschicht, die aus einem Material gefertigt ist, das eine höhere Verformungs-Versprödungstemperatur aufweist, als das Material des darunter befindlichen Substratkörpers, um die Grenzflächenschicht selektiv zu zerbrechen und ein additiv gefertigtes Werkstück über diese Sollbruchschicht von der Trägerstruktur zu trennen. Die Grenzflächenschicht muss auch eine höhere Verformungs-Versprödungs-Übergangstemperatur aufweisen, als das Material des Werkstücks. Hierzu werden gezielt Einschlüsse oder Versprödungskomponenten im Material der Grenzflächenschicht vorgesehen, die bei Erhitzen und nachfolgendem Abkühlen zum Bruch der Grenzflächenschicht führen können. Dies können z.B. Stähle mit hohem Stickstoffanteil sein. Andere, in diesem Dokument offenbarte, so genannte "embrittlement constituents" sind Sauerstoff, Schwefel oder Phosphor.

Aufgabe

Ausgehend hiervon ist es eine Aufgabe der Erfindung, ein verbessertes Verfahren für eine nachhaltige und Ressourcen-schonende additive Fertigung bereitzustellen, welches eine erleichterte Trennung des erzeugten Bauteils vom Substrat ermöglicht.

Kurzdarstellung der Erfindung

Die Aufgabe wird gelöst durch ein Verfahren nach Anspruch 1. Weitere vorteilhafte Ausgestaltungen sind Gegenstand der abhängigen Ansprüche, der Beschreibung und der Figuren. In der Beschreibung genannte Normen sind die in der jeweiligen zum Anmeldetag gültigen Fassung.

Erfindungsgemäß wird ein Verfahren zur additiven Fertigung eines Bauteils, insbesondere eines metallischen Bauteils, bereitgestellt, aufweisend die Schritte

- Bereitstellen mindestens eines Substrats, insbesondere einer Substratplatte, wobei das Substrat aus einem oder mehreren metallischen Substratmaterialien ausgebildet ist oder ausgebildet wird, welches eine Low Transformation Temperature (LTT)-Legierung ist, wobei die LTT-Legierung eine nach der Formel von Steven und Haynes

$$M_S(^\circ C) = 561 - 474*C - 33*Mn - 17*Ni - 17*Cr - 21*Mo$$

Wobei:

> $C$ = Massen-% Kohlenstoff
> $Mn$ = Massen-% Mangan
> $Ni$ = Massen-% Nickel
> $Cr$ = Massen-% Chrom
> $Mo$ = Massen-% Molybdän

berechnete Martensitstarttemperatur Ms unterhalb von 140 °C aufweist und die Martensitstarttemperatur Ms unterhalb der Fertigungstemperatur $T_F$ liegt, und weiterhin die LTT-Legierung ein Legierungssystem auf Basis der Hauptlegierungselemente Eisen-Chrom-Nickel oder Eisen-Mangan ist,
- Aufbau des Bauteils auf einer Aufbaufläche des Substrats, durch schichtweises Auftragen mindestens eines Werkstoffs bei einer Fertigungstemperatur $T_F$ unter Ausbildung eines Bauteil-Substrat-Verbunds über eine Grenzfläche,
- Abkühlen mindestens des Substrats im Bauteil-Substrat-Verbund nach dem vollständigen Aufbau des Bauteils auf eine Temperatur unterhalb der Martensitstarttemperatur Ms, wobei durch eine Martensitumwandlung und die damit einhergehende Volumenexpansion des metallischen Substratmaterials mindestens in der Grenzfläche zum Bauteil eine Umwandlungsspannung im Substrat induziert wird.
- Trennen des Bauteils vom Substrat.

Vorteilhafterweise ermöglicht das verbesserte Verfahren gemäß der Erfindung mit der Bereitstellung und Verwendung eines erfindungsgemäßen Substrats, insbesondere einer Substratplatte, welches beim vorgesehenen Schritt der Abkühlung des Substrats eine Martensitumwandlung unterläuft, dass das Substrat einerseits leichter und ohne größeren Aufwand von der aufgetragenen Struktur, also dem aufgebauten Bauteil, gelöst und andererseits bei geringer Aufbereitung wiederverwendet werden kann. Die martensitische Phasenumwandlung des Substratmaterials wird erfindungsgemäß erst nach vollständigem Auftragen und Aufbau des Bauteils durch das Abkühlen des Substrats gezielt steuerbar erzeugt. Man bedient sich - anders als bei der US 2018/0272609 A1, hierbei des Volumenexpansionseffekts (LTT-Effekt), der während einer martensitischen Umwandlung beim Abkühlen auftritt. Die Martensitumwandlung des eingesetzten Substrats ist vorteilhafterweise reversibel und das Substrat kann nach einer geringfügigen Aufarbeitung wiederverwendet werden.

Mit anderen Worten ermöglicht die Erfindung ein leichter ablösbares Substrat und damit eine deutliche vereinfachte Trennung vom Bauteil, indem im Substrat eine martensitische Umwandlung bei Temperaturen, deutlich unter der Fertigungstemperatur vorgesehen, beziehungsweise erzielt wird. Die Martensitumwandlung beim Abkühlen führt zu einer Volumenvergrößerung und damit induzierten Druckspannungen mindestens im Bereich der ausgebildeten Grenzfläche zwischen Substrat und Bauteil.

Der Aufbau der Bauteile gemäß der Erfindung kann prinzipiell durch alle bekannten additiven Fertigungsverfahren erfolgen. Die Bauteile können dabei aus allen diesen Verfahren zugänglichen Werkstoffarten, wie beispielsweise Kunststoff, Keramik oder Metall aufgebaut werden. Erfindungsgemäß bevorzugt ist jedoch ein additives Fertigungsverfahren für ein Bauteil aus Werkstoffen auf Metallbasis.

Unter einem Substrat wird erfindungsgemäß bevorzugt eine Substratplatte verstanden, die als Basis zum Aufbau des Bauteils mittels additiver Fertigung dient. Weiterhin kann das Substrat aber auch eine andersartige Stützstruktur sein und jegliche andere Geometrie für eine solche Stützstruktur zum Aufbau eines Bauteils mittels additiver Fertigung aufweisen, die nach erfolgtem Aufbau des Bauteils hiervon wieder getrennt wird.

Das Substrat, also beispielsweise eine Substratplatte, wird aus einer Low Transformation Temperature (LTT) Legierung hergestellt, welche im Gegensatz zu üblichen LTT-Legierungen eine nach Steven und Haynes berechnete Martensitstarttemperatur Ms von unterhalb 130 °C, bevorzugt unterhalb 100 °C, beispielsweise unterhalb von 70 °C, 60 °C, 50 °C oder 40 °C aufweist. Die einzustellende Martensitstarttemperatur Ms wird dabei in Abhängigkeit, bzw. unter Berücksichtigung der Fertigungstemperatur $T_F$ des auf das Substrat aufzutragenden Materials, also dem Werkstoff für das Bauteil, eingestellt. Durch Abkühlen des Substrats, in einem Kühlmedium, beispielsweise flüssigem Stickstoff, wird die martensitische Umwandlung erst nach vollständigem Auftragen des Bauteils gezielt steuerbar erzeugt.

Die Fertigungstemperatur $T_F$ wird alternativ auch Verarbeitungstemperatur genannt. Hierunter wird die für den Aufbau des Bauteils vorgegebene Temperatur verstanden. Mit anderen Worten ist dies die Temperatur $T_F$, bei der der Werkstoff auf das Substrat zum Aufbau der ersten Lage und dann in der zweiten und den nachfolgenden Lagen auf die bereits entstandene Bauteil-Lage als nächste Schicht aufgetragen wird. Im schweißtechnischen Kontext spricht man bei der Fertigungstemperatur $T_F$ auch von einer Zwischenlagentemperatur. Dies ist die Temperatur, auf die man beim Aufbau und Auftragen des Werkstoffs das Bauteil (bzw. den (Teil-)Bauteil-Substrat-Verbund) abkühlen lässt, bevor man die nächste Lage des Werkstoffs aufträgt.

Das Substrat kann aus einem Substratmaterial ausgebildet sein, das eine Martensitfinishtemperatur Mf zwischen 0 °C und -190 °C, bevorzugt zwischen -50 °C und - 150 °C aufweist. Bei der Martensitfinishtemperatur Mf ist die Martensitumwandlung des Substratmaterials abgeschlossen und die größte Volumenexpansion erreicht. Für die Bauteile wird im Gegensatz dazu angestrebt die Martensitfinishtemperatur Mf höher, möglichst nahe der Raumtemperatur, also ca. 20 °C anzulegen, um, wie beispielsweise in der US 2019/01600 595 A beschrieben, die Volumenexpansion zur Reduzierung von Schrumpfspannungen zu nutzen und dadurch induzierten Verzug im Bauteil zu vermeiden oder zu reduzieren.

Die Bereitstellung des Substrats, beispielsweise einer Substratplatte oder einer anderen Stützstruktur, die nach dem darauf erfolgten additiven Aufbau des Bauteils wieder davon abgetrennt werden soll, kann erfindungsgemäß bevorzugt ebenfalls mittels additiver Fertigungsverfahren erfolgen. Es ist jedoch auch erfindungsgemäß umfasst, wenn das Substrat aus einem geeigneten metallischen Material, beispielsweise durch Gießen oder Schmieden, hergestellt wird.

In einer bevorzugten Ausgestaltung des erfindungsgemäßen Verfahrens umfasst das Bereitstellen des Substrats eine Metalldraht-basierte additive Fertigung mittels Laserstrahlen, Elektronenstrahlen oder Lichtbogen. Bevorzugt kann die Bereitstellung des Substrats eine Fertigung durch Lichtbogendrahtauftragsschweißen (WAAM), umfassen. Erfindungsgemäß wird hierunter insbesondere ein Lichtbogenschweißverfahren nach DIN EN ISO 4063 unter ausschließlicher Verwendung von drahtförmigen Schweißzusatz verstanden. Für die drahtbasierte additive Fertigung des Substrats mittels WAAM kann Metallschutzgasschweißen (MSG) oder auch Wolfram-Inertgasschweißen (WIG) oder Plasmaschweißen mit Kaltdrahtzuführung verwendet werden. Beim WIG-Schweißen erfolgt das Abschmelzen eines extern zugeführten Schweißdrahts über einen Lichtbogen, welcher zwischen einer nicht-abschmelzenden Wolframelektrode und dem aufzubauenden Bauteil, hier das Substrat, erzeugt wird. Beim MSG-Schweißen wird eine abschmelzende Elektrode verwendet die gleichzeitig auch als Schweißzusatz dient. Beide Verfahren werden üblicherweise unter Einsatz eines Schutzgases durchgeführt, um eine Oxidation des Schmelzbads in der Prozesszone zu verhindern. Der Vorteil des WAAM-Verfahrens ist, dass generell auch sehr große Bauteile in verhältnismäßig kurzer Zeit wirtschaftlich aufgebaut werden können. Vorteilhaft ist auch die Materialersparnis gegenüber subtraktiven Verfahren. Bevorzugt wird ein MSG-Schweißprozess für die Bereitstellung des Substrats eingesetzt. Vorteilhafterweise können diese Verfahren leicht automatisiert werden. Dies ist insbesondere für eine industrielle Serienfertigung von Bedeutung.

In einer weiter bevorzugten Ausgestaltung kann das Bereitstellen des Substrats durch Lichtbogendrahtauftragsschweißen mit Mehrdrahtzufuhr erfolgen. Hierbei werden mehrere Schweißzusätze (Schweißdrähte) gleichzeitig in die Prozesszone gefördert, aufgeschmolzen und miteinander vermischt. Es können hierbei erfindungsgemäß Schweißzusätze gleicher oder unterschiedlicher chemischer Zusammensetzung eingesetzt werden. Besitzen die eingesetzten Schweißzusätze eine unterschiedliche chemische Zusammensetzung, entsteht durch die Vermischung in der Prozesszone die eigentliche Ziellegierung für das Bauteil, vorliegend das erfindungsgemäße Substrat. Hierdurch kann optimale Einstellung und Anpassung des so, insbesondere in situ gefertigten Substratmaterials an die gewünschten Prozessparameter, wie beispielsweise die Martensitstarttemperatur erzielt werden.

In einer bevorzugten Ausgestaltung des Verfahrens kann das Abkühlen des Substrats im Bauteil-Substrat-Verbund durch Eintauchen in ein Kühlmedium erfolgen. Das Abkühlen des erfindungsgemäßen Verfahrens erfolgt nach Abschluss des Aufbaus des Bauteils und ist von einem lediglich Auskühlen lassen von der Fertigungstemperatur $T_F$ auf Raumtemperatur (Umgebungstemperatur) abzugrenzen. Das Abkühlen des Substrats kann beispielsweise auf eine Temperatur unterhalb der Raumtemperatur, bevorzugt unter 0 °C oder unterhalb von - 20 °C erfolgen. Unter Raumtemperatur wird erfindungsgemäß eine Temperatur von ca. 20 °C verstanden. Mit dem Abkühlen wird die Martensitumwandlung im Substrat und die maximale Volumenexpansion induziert. Das erfindungsgemäße Abkühlen kann beispielsweise durch Abschrecken mittels Eintauchens in flüssigen Stickstoff als Kühlmedium erfolgen. Beim Eintauchen kann dabei wahlweise im Wesentlichen nur das Substrat in das Kühlmedium eingebracht werden oder der gesamte Bauteil-Substrat-Verbund. In einer anderen bevorzugten Ausgestaltung kann das Abkühlen des Substrats im Bauteil-Substrat-Verbund in mehreren Abkühl-Aufwärmzyklen erfolgen. Hierbei kann beispielsweise nach der gewünschten Haltezeit im Kühlmedium, das Substrat, ggf. den Substrat-Bauteil-Verbund, wieder auf eine höhere Temperatur, beispielsweise Raumtemperatur aufwärmen, um diese dann erneut mit dem Kühlmedium abzukühlen, also beispielsweise in flüssigen Stickstoff als Kühlmedium eintauchen.

In einer weiteren Ausgestaltung des erfindungsgemäßen Verfahrens kann mit dem Abkühlen bereits mindestens teilweise eine Trennung des Bauteils vom Substrat erfolgen. Somit kann erfindungsgemäß das Trennen des Substrats vom Bauteil bereits teilweise oder vollständig erfolgen. Nach dem Trennen kann das Bauteil üblichen Nachbehandlungsschritten, wie beispielsweise einer Wärmebehandlung zur Vergütung des Werkstoffs oder einem Schleifen oder Fräsen zugeführt werden. Das Substrat kann erfindungsgemäß vorteilhafterweise, gegebenenfalls nach einer Aufbereitung, wiederverwendet und in eine additive Fertigung eines Bauteils eingesetzt werden. Dies ermöglicht eine deutliche Kosten- und Materialersparnis, gerade in industriell eingesetzten Verfahren.

In einer Ausführungsform des Verfahrens kann das Abkühlen vorteilhafterweise bereits die vollständige Trennung des Bauteil-Substrat-Verbunds bewirken, so dass Abkühlen und Trennen gleichzeitig erfolgen. Hierdurch wird vorteilhafterweise ein selbstlösendes Substrat bereitgestellt und ein separater Trennschritt ist in dieser Ausgestaltung des Verfahrens nicht erforderlich. Dies bedeutet eine weitere Vereinfachung des Verfahrens.

In einer weiteren bevorzugten Ausgestaltung kann das Substrat nach dem Trennen und einer Aufbereitung, wieder in ein Verfahren zur additiven Fertigung eingesetzt werden. Die Aufbereitung kann beispielsweise durch oberflächliches Abschleifen, Fräsen oder eine Wärmebehandlung erfolgen.

Ein Substrat zur Verwendung in einem Verfahren wie vorstehend in verschiedenen Ausgestaltungen und Ausführungsformen beschrieben ist aus einer LTT-Legierung ausgebildet, welches eine martensitische Phasenumwandlung unterläuft und bevorzugt eine nach der Formel von Steven und Haynes berechnete Martensitstarttemperatur von unterhalb 70°C, besonders bevorzugt unterhalb von 60°C aufweist. Beispielsweise kann das Substrat eine Martensitstarttemperatur Ms von ca. 55 °C, 50 °C, 40 °C, 30 °C oder 20 °C oder unterhalb von 20 °C, beispielsweise 0 °C aufweisen.

In einer bevorzugten Ausführungsform ist das metallische Substratmaterial eine Low Transformation Temperature (LTT) Legierung, beispielsweise eine Legierung auf Cr-Ni-Basis von oder Mn-basis. Die chemische Zusammensetzung ist hierbei so zu wählen, dass die gewünschte Martensitumwandlungstemperatur eingestellt wird. Für das Legierungssystem Eisen-Chrom-Nickel kann zum Erhalt einer Martensitstarttemperatur von 0 °C ein Chrom und Nickelgehalt von jeweils 16,5 m-% eingestellt werden. Für die gleiche Martensitstarttemperatur kann im Legierungssystem Eisen-Mangan ein Mangangehalt von 17 m-% eingestellt werden. Durch weitere Legierungselemente (insbesondere Kohlenstoff) kann eine zusätzliche Reduzierung der Martensitstarttemperatur bewirkt werden, sodass in technischen Legierungen die Gehalte der Hauptlegierungselemente (Bspw. Ni, Cr oder Mn) geringer ausfallen müssen, um die gewünschte Martensitstarttemperatur Ms zu erhalten. Eine technische Legierung mit 0,058 % C, 1,53 % Mn und 0,165 % Mo bräuchte demnach einen Chrom- und Nickelgehalt von je 14,1 % für eine Ms-Temperatur von ca. 0 °C.

Eine Abschätzung der erforderlichen chemischen Zusammensetzung kann über Formeln zur Berechnung der Martensitstarttemperatur, beispielsweise die Formel nach Steven und Haynes (W. Steven and A. G. Haynes, "The Temperature of Formation of Martensite and Bainite in Low-Alloy Steels," Journal of the Iron and Steel Institute, Vol. 183, No. 8, 1956, pp. 349-359) erfolgen.

In einer anderen Ausgestaltung ist das erfindungsgemäße Substrat aus mindestens zwei unterschiedlichen metallischen Substratmaterialien ausgebildet.

In einer weiter bevorzugten Ausgestaltung ist das Substrat aus mindestens zwei-Lagen aus verschiedenem metallischen Substratmaterialien ausgebildet, die im Wesentlichen parallel zur Aufbaufläche übereinander angeordnet sind, wobei das Substratmaterial der Lage die die Aufbaufläche umfasst (Oberseite) oder die näher zur Aufbaufläche angeordnet ist, jeweils eine höhere Martensitstarttemperatur Ms aufweist, als das Substratmaterial der darunter angeordneten Lage. Ist das Substrat eine plan ausgestaltete Substratplatte, kann beispielweise eine erste Lage die Aufbaufläche umfassen, wobei diese Lage eine Martensitstarttemperatur von beispielsweise Ms von 20 °C aufweist und die darunter angeordnete Lage, die weiter von der Aufbaufläche entfernt ist, eine Martensitstarttemperatur Ms von >>0 °C. In einer solchen, auch als Multi-Material-Substratplatte bezeichneten, Ausführungsform wird dem Verformungseffekt bei der Abkühlung eine Vorzugsrichtung gegeben, die die Trennung von dem aufgebauten Bauteil noch weiter erleichtert.

In einer anderen Ausgestaltung des erfindungsgemäßen Verfahrens sind in der Aufbaufläche des Substrats Sprödphasen im Substratmaterial ausgebildet. Das lokale Vorsehen solcher Sprödphasen, insbesondere im Bereich von Grenzflächen, kann vorteilhaft dazu genutzt werden die Trennung von einem nachfolgend aufgetragenen Bauteil weiter zu erleichtern, da diese eine schlechtere Anbindung an das aufgebaute Bauteil aufweisen können. Solche Sprödphasen können beispielsweise intermetallische Phasen, beispielsweise Eisenaluminide sein.

Ausführliche Darstellung der Erfindung

Die Bereitstellung der Substratplatte kann erfindungsgemäß beispielsweise mittels einer Herstellung über additive Fertigungsverfahren, bevorzugt durch Metalldraht-basierte additive Fertigung mittels Laserstrahlen, Elektronenstrahlen oder Lichtbogen erfolgen. In einer besonders bevorzugten Ausführungsform ist dieses ein Wire Arc Additive Manufacturing (WAAM). Diese Verfahren sind zum Beispiel in Pan Z., Ding D., Wu B., Cuiuri D., Li H., Norrish J. (2018) Arc Welding Processes for Additive Manufacturing: A Review. In: Chen S., Zhang Y., Feng Z. (eds) Transactions on Intelligent Welding Manufacturing. Transactions on Intelligent Welding Manufacturing. Springer, Singapore. https://doi.org/10.1007/978-981-10-5355-9_1] beschrieben. Weiter bevorzugt kann die Herstellung der Substratplatte mittels Mehrdraht-Lichtbogenschweißen und/oder in-situ-Legieren erfolgen, wie es beispielsweise bei Reisgen et al. 2019, Reisgen, U.; Sharma, R.; Oster, L. Plasma Multiwire Technology with Alternating Wire Feed for Tailor-Made Material Properties in Wire and Arc Additive Manufacturing. Metals 2019, 9, 745. https://doi.org/10.3390/met9070745 beschrieben ist. Hierbei wird ein Lichtbogen im Schweißprozess als Wärmequelle genutzt, um mehrere kontinuierlich zugeführte Schweißdrähte (Schweißzusätze) gleicher oder unterschiedlicher Legierungen aufzuschmelzen und in die Prozesszone zu fördern. Werden Schweißzusätze unterschiedlicher chemischer Zusammensetzung eingesetzt, werden diese in der Prozesszone zur Ziellegierung vermischt. Durch lagenweises Auftragsschweißen wird dann ein Rohling für die Substratplatte mit individuell eingestellter Ziellegierung hergestellt. Die Ziellegierung wird dabei erfindungsgemäß so eingestellt, dass mindestens im Bereich der Bauteil-Substrat-Grenzfläche eine Ms-Temperatur (Martensitstarttemperatur) vorliegt, die eine martensitische Phasenumwandlung unterhalb der Fertigungstemperatur induziert.

Hierbei kann zusätzlich eine Berücksichtigung von Aufmischungseffekten durch partielles Aufschmelzen der Substratplatte in der Prozesszone vorteilhaft sein. Die Aufmischung A wird aus dem prozentualen Massenanteil des Materials der aufgeschmolzenen Substratplatte (aufgeschmolzenes Substratmaterial) und des aufgetragenen Materials für das Bauteil (Werkstoff) nach der Formel

$$A = m\%\text{Anteil Substratmaterial} / (m\%\text{Anteil Werkstoff} + m\%\text{ Anteil Substratmaterial})$$

bestimmt.

Eine Abschätzung der Martensitstarttemperatur Ms anhand der Legierungselemente kann beispielsweise über die Formel nach Steven und Haynes erfolgen (W. Steven and A.G. Haynes, The temperature of formation of martensit and bainite in low-alloy-steels, Journal oft he Iron and Steel Institute, August, 1956:349-359, 1956).

$$M_s(°C) = 561 - 474*C - 33*Mn - 17*Ni - 17*Cr - 21*Mo$$

Wobei:

$C$ = Massen-% Kohlenstoff
$Mn$ = Massen-% Mangan
$Ni$ = Massen -% Nickel
$Cr$ = Massen-% Chrom
$Mo$ = Massen-% Molybdän

Beispiel 1

Herstellung der Substratplatte

Die Herstellung einer Substratplatte für den Einsatz in die erfindungsgemäße additive Fertigung eines Bauteils erfolgte durch einen lagenweisen Aufbau einer wandförmigen Struktur mit Hilfe eines Kaltdrahtunterstützten MSG-Schweißprozesses. Vorteilhafterweise können mit dem WAAM Verfahren auch ohne Probleme andere Geometrien erzeugt werden. In diesem Fall kam ein herkömmliches Schweißgerät (WB-PS500 L) zum Einsatz. Als Prozessmodifikation wurde ein MSG Pulsprozess eingestellt. Als Elektrode wurde ein Schweißzusatz des Typs EN ISO 14343-A: G 19 9 L Si verwendet. Als Kaltdraht wurde ein Schweißzusatz des Typs EN ISO 16834-A: G 79 4 M Mn4Ni2CrMo bei einer Fertigungstemperatur $T_F$ von 100°C ins Schmelzbad gefördert. Im schweißtechnischen Kontext spricht man hier auch von einer Zwischenlagentemperatur. Dies ist die Temperatur, auf die man das Bauteil abkühlen lässt, bevor man die nächste Lage aufträgt. Die Drahtfördergeschwindigkeit des Kaltdrahtes betrug 2 m/min, die Geschwindigkeit der Elektrode 8 m/min. Der so gefertigte Rohling hatte die Abmessungen 190 x 60 x 5 mm. Anschließend erfolgte eine spanende Bearbeitung der Oberflächen auf eine ebene Platte mit den Abmessungen 180 x 50 x 5 mm. Die Analyse der chemischen Zusammensetzung der so hergestellten Substratplatte erfolgte durch funkenspektroskopische Analyse (OES, Funkenspektrometer Spectro M7, kalibriert). Die Prozentwerte der Zusammensetzung in der Tabelle 1 sind in Masseprozent angegeben. Die Messstellen wurden in drei Clustern über die Länge der Substratplatte verteilt. Auf Basis der OES Messungen erfolgte eine Berechnung der erwarteten Martensitstarttemperatur. Diese nach Steven und Haynes berechnete Ms-Temperatur lag zwischen 55°C und 66 °C. Demgemäß musste die Substratplatte auf ca. -145 °C abgekühlt werden, um vollständig martensitisch umzuwandeln und die maximale Volumenvergrößerung zu erfahren. Der Siedepunkt von Stickstoff liegt bei -196 °C, daher wurde flüssiger Stickstoff als Kühlmedium ausgewählt und eingesetzt um die Martensitumwandlung zu bewirken.

Tabelle 1 Gemittelte Ergebnisse der OES Analyse der chemischen Zusammensetzung des Substrats

| C [%] | Mn [%] | Ni[%] | Cr [%] | Mo [%] | Fe [%] | Ms [°C] |
|---|---|---|---|---|---|---|
| 0,0595 | 1,53 | 8,4 | 15,92 | 0,165 | Ausgleich auf 100% | 65,4 |

Aufbau des Bauteils

Nach der chemischen Analyse der Substratplatte, erfolgte das Aufschweißen einer wandförmigen Struktur als Bauteil aus niedriglegiertem Stahl (Typ EN ISO 16834-A: G 79 4 M Mn4Ni2CrMo) mit dem gleichen Schweißgerät, welches zur Herstellung der Substratplatte verendet wurde (WB-P500 L), jedoch unter Einsatz eines wärmearmen geregelten Kurzlichtbogenprozesses bei einer Fertigungstemperatur TF von 100 °C. Nach dem vollständigen Aufbau konnten keinerlei Werkstofftrennungen zwischen wandförmigem Bauteil (Struktur) und Substrat festgestellt werden. Anschließend erfolgte das Abkühlen des so hergestellten Bauteil-Substratplatten-Verbunds durch vollständiges Eintauchen (Abschrecken) in flüssigen Stickstoff mit einer Haltezeit von 5 min. Nach dem Abschrecken konnte eine deutliche Werkstofftrennung im Randbereich zwischen Bauteil und Substratplatte beobachtet werden, welche sich über ca. 25 % der Substratlänge erstreckt. Vorteilhafterweise konnte so das Bauteil leichter von der Substratplatte getrennt werden. Zusätzlich kann erfindungsgemäß die Substratplatte vorteilhafterweise mit geringfügiger Nachbearbeitung, beispielsweise durch oberflächliches Schleifen oder Fräsen wiederverwendet und in die additive Fertigung eines Bauteils eingesetzt werden.

Beispiel 2

Herstellung der Substratplatte

Die Herstellung einer Substratplatte für den Einsatz in die erfindungsgemäße additive Fertigung eines Bauteils erfolgte durch einen lagenweisen Aufbau einer wandförmigen Struktur mit Hilfe eines Kaltdrahtunterstützten MSG-Schweißprozesses. Hierbei kam ebenfalls ein herkömmliches Schweißgerät (WB-P500L) zum Einsatz. Als Prozessmodifikation wurde ein MSG-Pulsprozess eingestellt. Als Elektrode wurde ein Schweißzusatz des Typs DIN 8555: MSG 7-GF-250-KP verwendet. Als Kaltdraht wurde ein Schweißzusatz des Typs EN ISO 16834-A: G 79 4 M Mn4Ni2CrMo bei einer Fertigungstemperatur TF von 100 °C ins Schmelzbad gefördert. Im Gegensatz zum ersten Beispiel wurde ein Legierungskonzept für die Substratplatte auf Basis eines Mangan-Chrom-Nickel-Systems gewählt. Eine Darstellung des verwendeten Legierungskonzepts ist bei Diez et al. in Martinez Diez, F.Henry Granjon Prize Competition 2007 Winner, Category B "Materials Behavior and weldability" Development of a Compressive Residual Stress Field Around a Weld Toe by Means of Phase Transfomations. Weld World 52, 63-78 (2008) wiedergegeben.

Die Drahtfördergeschwindigkeit des Kaltdrahtes betrug 4 m/min, die Geschwindigkeit der Elektrode 8 m/min. Der so gefertigte Rohling hatte die Abmessungen 210 x 35 x 8 mm. Anschließend erfolgte eine spanende Bearbeitung der Oberflächen auf eine ebene Platte mit den Abmessungen 200 × 31 × 6 mm. Die Analyse der chemischen Zusammensetzung der so hergestellten Substratplatte erfolgte durch funkenspektroskopische Analyse (OES). Die 6 Messstellen wurden über die Breite der gefertigten Substratplatte verteilt. In der Tabelle 2 sind die gemittelten Ergebnisse der funkenspektroskopischen Analyse in Masseprozent wiedergegeben.

Tabelle 2 Gemittelte Ergebnisse der OES Analyse der chemischen Zusammensetzung des Substrats aus Beispiel 2

| C [%] | Mn [%] | Ni [%] | Cr [%] | Mo [%] | Fe [%] | Ms [°C] |
|---|---|---|---|---|---|---|
| 0,322 | 8,8 | 1,29 | 1,51 | 0,232 | Ausgleich auf 100 % | 65,5 |

Auf Basis der OES Messungen erfolgte eine Berechnung der erwarteten Martensitstarttemperaturen die aufgrund von Schwankungen der chemischen Zusammensetzung an den verschiedenen Messpunkten auf der Substratplatte schwanken. Mangan als Legierungsbestandteil wirkt sich gemäß Steven und Haynes etwa doppelt so stark auf die Martensitstarttemperatur aus wie Chrom oder Nickel. Es konnte für einen Messpunkt nach Steven und Haynes eine Martensitstarttemperatur Ms von minimal 36,8 °C bestimmt werden.

Aufbau des Bauteils

Nach der chemischen Analyse der Substratplatte, erfolgte das Aufschweißen einer wandförmigen Struktur als Bauteil aus niedriglegiertem Stahl ((EN ISO 16834-A: G 79 4 M Mn4Ni2CrMo). Die weitere Durchführung sowie die Fertigungsparameter entsprachen genau denen aus Beispiel 1.

Nach dem Abschrecken in flüssigem Stickstoff als Kühlmedium konnte eine deutliche Werkstofftrennung im Randbereich zwischen Bauteil und Substratplatte beobachtet werden. Es wurden nachfolgend mehrere Abkühl-Aufwärmzyklen auf Raumtemperatur durchlaufen, wobei sich eine fortschreitende Rissbildung zwischen Bauteil und Substratplatte zeigte, welche sich final über ca. 50 % der Substratlänge erstreckte. Vorteilhafterweise konnte so das Bauteil leichter von der Substratplatte getrennt werden. Zusätzlich kann erfindungsgemäß die Substratplatte vorteilhafterweise mit geringfügiger Nachbearbeitung, beispielsweise durch oberflächliches Schleifen oder Fräsen wiederverwendet und in die additive Fertigung eines Bauteils eingesetzt werden. Die Wiederverwendbarkeit der Substratplatte ist ein wesentlicher Vorteil, der zur Nachhaltigkeit und zur Material- und Kostenersparnis beiträgt.

Beispiel 3

Herstellung eines Blocks aus Schweißgut auf niedriglegierter Substratplatte

Hierbei wurde der Schweißzusatz aus Beispiel 2 (DIN 8555: MSG 7-GF-250-KP) verwendet, um einen Block aus Schweißgut mit den Abmessungen 20 mm x 20 mm x 100 mm aufzubauen. Das Material wurde auf eine Substratplatte aus niedriglegierten Stahl des Typs S355JR gemäß DIN 8555: MSG 7-GF-250-KP aufgetragen. Die schweißtechnische Verarbeitung erfolgte gemäß den Beispielen 1 und 2.

Während dem Abkühlen des Bauteils kam es zu einer deutlichen Werkstofftrennung im Bereich der Schmelzlinie zwischen Schweißgut und Substrat. Gemäß der Richtwertanalyse des Schweißzusatzes wird die Rissbildung auf eine martensitische Phasenumwandlung aufgrund einer reduzierten Martensitstarttemperatur zurückgeführt.

Kurzdarstellung der Figuren

Fig. 1 a-c zeigen schematisch Schritte eines erfindungsgemäßen Verfahrens zur additiven Fertigung

Fig. 2 schematisch ein Lichtbogendrahtschweißverfahren mit MSG-Schweißen,

Fig. 3 a-b zeigen schematisch die Fertigung eines erfindungsgemäßen Substrats,

Fig. 4a zeigt eine fotographische Abbildung des Substrats aus Beispiel 1,

Fig. 4b zeigt ein Balkendiagramm mit den zu den in Fig.4a markierten Messpunkten, zugeordneten ermittelten chemischen Zusammensetzungen des Substrats aus Beispiel 1,

Fig. 5 zeigt in einem Diagramm die Temperatur-Dehnungskurve des Substratmaterials aus Beispiel 1.

Fig. 6 zeigt in einem Balkendiagramm die berechneten Martensitstarttemperaturen zu den Messpunkten aus Beispiel 1

Fig. 7a zeigt eine fotografische Abbildung des Bauteil-Substrat-Verbunds aus Beispiel 1 nach dem Abkühlen

Fig 7b zeigt die Vergrößerung des in Fig. 7a markierten Bereichs X des Bauteil-Substrat-Verbunds

Fig. 8 zeigt schematisch eine bevorzugte Ausgestaltung mit einem Multi-Material-Substrat.

Nachfolgend wird die Erfindung eingehender unter Bezugnahme auf die Figuren dargestellt. Dabei ist anzumerken, dass unterschiedliche Aspekte beschrieben werden, die jeweils einzeln oder in Kombination zum Einsatz kommen können. D.h. jeglicher Aspekt kann mit unterschiedlichen Ausführungsformen der Erfindung verwendet werden, soweit nicht explizit als reine Alternative dargestellt.

Weiterhin wird nachfolgend der Einfachheit halber in aller Regel immer nur auf eine Entität Bezug genommen werden. Soweit nicht explizit vermerkt, kann die Erfindung aber auch jeweils mehrere der betroffenen Entitäten aufweisen. Insofern ist die Verwendung der Wörter "ein", "eine" und "eines" nur als Hinweis darauf zu verstehen, dass in einer einfachen Ausführungsform zumindest eine Entität verwendet wird.

Soweit nachfolgend Verfahren beschrieben werden, sind die einzelnen Schritte eines Verfahrens in beliebiger Reihenfolge anordbar und/oder kombinierbar, soweit sich durch den Zusammenhang nicht explizit etwas Abweichendes ergibt. Weiterhin sind die Verfahren - soweit nicht ausdrücklich anderweitig gekennzeichnet - untereinander kombinierbar.

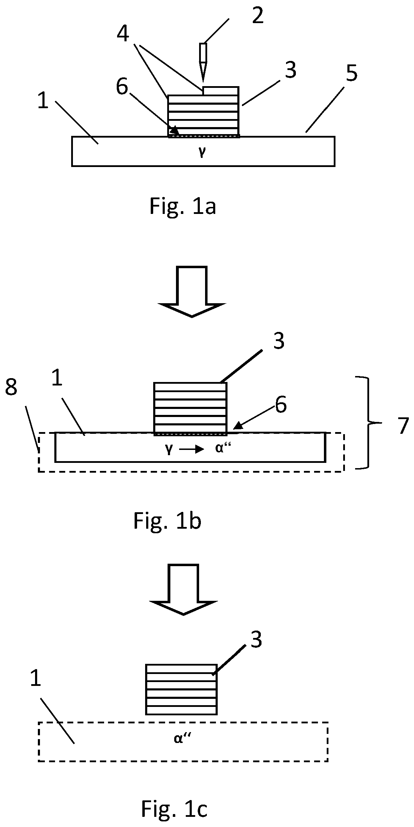

Die Figuren 1 a-c zeigen einen schematisch den Ablauf eines erfindungsgemäßen Verfahrens zur additiven Fertigung.

In Figur 1a wird auf ein bereitgestelltes Substrat 1 mit einem Druckkopf 2 ein Werkstoff zum Aufbau eines Bauteils 3 in Lagen 4 (Schichten) aufgetragen. Das Substrat 1 ist in der gezeigten Ausgestaltung eine Substratplatte. Das Substrat 1 ist erfindungsgemäß aus einem metallischen Material ausgebildet. Der lagenweise (schichtweise) Aufbau des Bauteils 3 aus dem Werkstoff erfolgt bei einer vorgegebenen Fertigungstemperatur TF. Bei dieser Temperatur TF liegt das Material des Substrats 1 in einer Materialphase, beispielsweise in einer Austenitphase ($\gamma$) mit einem zugeordneten Volumen vor. Beim Auftrag der ersten Lage 4a des Werkstoffs auf die Aufbaufläche 5 des Substrat 1 entsteht die Grenzfläche 6 zum Bauteil 3 und damit ein Bauteil-Substrat-Verbund 7. Das Material des Substrats 1 (Substratmaterial) Das erfindungsgemäße Substrat 1 ist aus einem metallischen Material ausgebildet, welches unterhalb der Fertigungstemperatur TF eine martensitische Phasenumwandlung unterläuft und bevorzugt eine Martensitstarttemperatur von unterhalb 140°C, beispielsweise von beispielsweise unterhalb 100 °C, beispielsweise unterhalb von 70°C besonders bevorzugt unterhalb von 60°C aufweist. Beispielsweise kann das Substrat 1 eine Martensitstarttemperatur Ms von ca. 55 °C, 50 °C, 40 °C, 30°C oder 20 °C oder unterhalb von 20 °C, beispielsweise 0°C aufweisen. Erfindungsgemäß ist das metallische Substratmaterial eine Low Transformation Temperature (LTT) Legierung.

In der Figur 1b wird in einem nächsten Schritt nach dem vollständigen Aufbau des Bauteils 3 auf der Substratplatte 1 wird der entstandene Bauteil-Substrat-Verbund 7 erfindungsgemäß abgekühlt. Die Abkühlung kann beispielsweise durch Eintauchen in ein Kühlmedium, wie beispielsweise flüssigen Stickstoff erfolgen. Während der Abkühlung erfolgt eine Phasenumwandlung ($\gamma$-> $\alpha$") des Substratmaterials von $\gamma$ hin zur Martensitphase $\alpha$" martensitische Phasenumwandlung (Martensitumwandlung). Hiermit geht eine Volumenexpansion 8 des Substrats 1 einher, die in der Figur mit der gestrichelten Darstellung schematisch dargestellt ist. Durch die Volumenexpansion 8 des Substrats 1 wird in der Grenzfläche 7 eine Druckspannung induziert.

In der Figur 1c ist das Bauteil 3 von der Substratplatte getrennt. Das Substrat 1 liegt in der dargestellten Ausgestaltung zum Zeitpunkt der Trennung vom Bauteil 3 vollständig aus Substratmaterial in Martensitphase $\alpha$" mit der maximalen martensitischen Volumenexpansion 8 vor, die erfindungsgemäß mindestens eine teilweise Trennung des Bauteils 3 vom Substrat 1 bewirkt. In einer bevorzugten Ausgestaltung des erfindungsgemäßen Verfahrens löst sich das Substrat 1 beim Abkühlen mit der Martensitumwandllung und der damit erzeugten Volumenexpansion 8 und der entstehenden Druckspannungen in der Grenzfläche 6 bereits vollständig vom Bauteil 3. Eine aufwändige subtraktive Entfernung des Substrats 1 vom Bauteil 3 ist damit nicht mehr erforderlich. Dies bedeutet insbesondere auch für eine industrielle Serienfertigung eine deutliche Zeit- und Kostenersparnis im Fertigungsprozess. Das Substrat 1, also beispielsweise eine Substratplatte, kann darüber hinaus, gegebenenfalls nach geringfügiger Aufbereitung, beispielsweise durch oberflächliches Schleifen oder Fräsen wiederverwendet werden, wodurch sich weitere Möglichkeiten der Kostenersparnis ergeben.

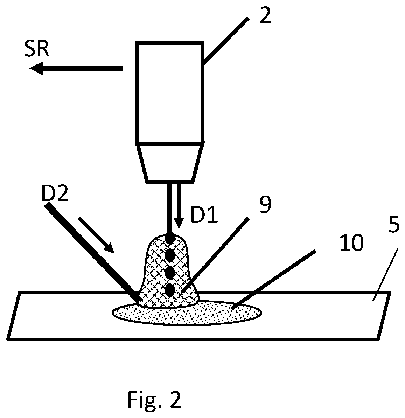

Figur 2 zeigt schematisch ein Lichtbogendrahtschweißverfahren, beispielsweise MSG-Schweißen, welches in einer bevorzugten Ausführungsform in ein erfindungsgemäßes Verfahren, wie auch in den Figuren 1a-c dargestellt, eingesetzt werden kann. Als Druckkopf 2 wird ein Schweißbrenner 2 eingesetzt. Beim MSG Schweißen wird eine abschmelzende Elektrode D2 verwendet die gleichzeitig auch als Schweißzusatz dient. Dazu wird beim MSG-Schweißen ein kontinuierlich geförderter drahtförmiger Schweißzusatz (Schweißdraht) D1 und das Material der abschmelzenden Elektrode als Schweißzusatz D2, sowie zumindest teilweise die Aufbaufläche 5 der Substratplatte 1 mit Hilfe eines erzeugten elektrischen Lichtbogens 9 als Wärmequelle aufgeschmolzen. Der Schweißzusatz D1, als Kaltdraht zugeführt, und der Schweißzusatz D2 geht im Wirkbereich des Lichtbogens 9 (Prozesszone), meist in Tropfenform, ins entstehende Schmelzbad 10 in der Substratplatte 1 über und bilden nach Erstarren eine erste Schweißraupe. Durch Bewegen des Schweißbrenners 2 in Schweißrichtung SR und des zugeführten Drahtes D1 kann entlang eines vorgegebenen Pfades eine beliebigen Kontur Material aufgetragen werden. Der Vorgang des lagenweisen Auftragens wird dann bis zum vollständigen Aufbau des Bauteils 3 wiederholt. Das MSG-Verfahren wird üblicherweise unter Einsatz eines Schutzgases durchgeführt, um eine Oxidation des Schmelzbads 10 in der Prozesszone zu verhindern.

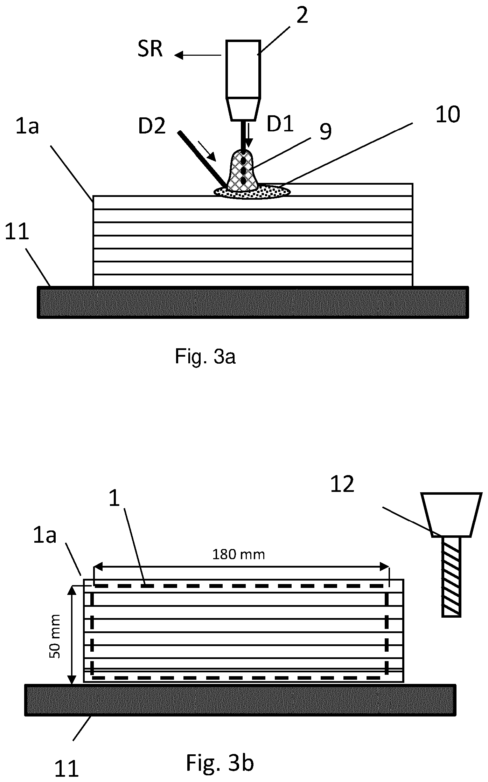

Die Figuren 3a und 3b zeigen schematisch die Fertigung eines Rohlings 1a eines erfindungsgemäßen Substrats 1 mittels additiver Fertigung. Bevorzugt wird hierzu ein Lichtbogendrahtschweißverfahren, wie in Figur 2 dargestellt eingesetzt.

In der Figur 3a wird der Aufbau eines Rohlings 1a für ein Substrat 1 mittels lagenweisen Auftrags von Substratmaterial auf einer Basis 11 dargestellt. Bevorzugt erfolgt die Fertigung der erfindungsgemäßen Substratplatte 1 durch lagenweisen Aufbau einer wandförmigen Struktur mit Hilfe eines Kaltdrahtunterstützten MSG-Schweißprozesses, wie er zur Figur 2 beschrieben wurde. In einer weiter bevorzugten Ausgestaltung können mehrere kontinuierlich zugeführte Schweißdrähte D (Schweißzusätze) gleicher oder unterschiedlicher Legierungen und in die Prozesszone gefördert und aufgeschmolzen werden. Werden Schweißzusätze unterschiedlicher chemischer Zusammensetzung eingesetzt, werden diese in der Prozesszone zur Ziellegierung vermischt. Durch lagenweises Auftragsschweißen wird dann ein Rohling 1a für die Substratplatte 1 mit individuell eingestellter Ziellegierung mit der gewünschten Martensitstarttemperatur Ms hergestellt. Die Ms-Temperatur (Martensitstarttemperatur) wird so angelegt, dass eine martensitische Phasenumwandlung unterhalb der Fertigungstemperatur des nachgelagerten Aufbaus eines gewünschten Bauteils 3 mittels additiver Fertigung induziert wird.

In der Figur 3b ist die Nachbearbeitung des gefertigten Substrat-Rohlings 1a durch eine spanende Bearbeitung der Oberflächen auf eine ebene Substratplatte 1 (gestrichelte Kontur) mit den Abmessungen 180 x 50 x 5 mm, beispielsweise mittels einer Fräse 12 schematisch dargestellt.

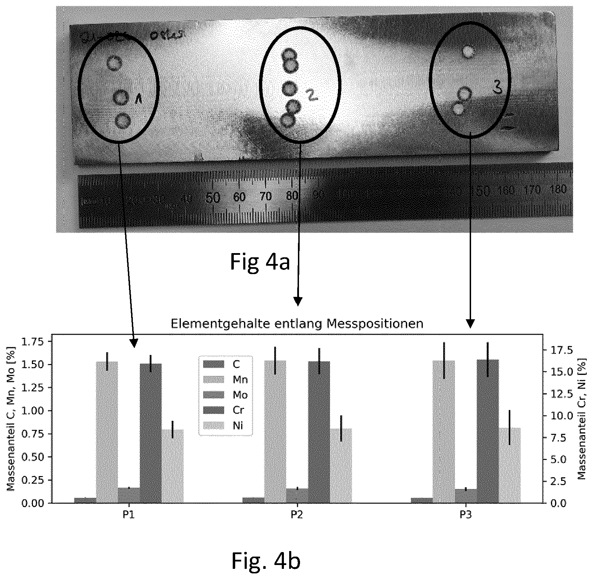

Die Fig. 4a zeigt eine fotographische Abbildung des Substrats 1, also der gefertigten Substratplatte 1 aus Beispiel 1. In der Abbildung sind Messpunkte angezeigt, an denen die chemische Zusammensetzung des Substrats 1 mittels funkenspektrometrischer Analyse ermittelt wurde. Die markierten Messstellen verteilen sich in drei Clustern P1, P2 und P3 über die Länge der Substratplatte 1.

Die Figur 4b zeigt ein Balkendiagramm mit den zu den in Figur 4a markierten Messpunkten, zugeordneten ermittelten chemischen Zusammensetzungen des Substrats 1 aus Beispiel 1. Mit anderen Worten stellen sie die Ergebnisse der funkenspektrometrischen Analyse (OES) der chemischen Zusammensetzung der im hergestellten abgebildeten Substrat 1 aus Figur 4a zugeordneten Balkendiagramm dar. Die Ergebnisse der OES Messungen werden als Mittelwerte der Messwerte im Messcluster P1, P2 und P3 im Balkendiagramm dargestellt. Die gemittelte Zusammensetzung des Substratmaterials wurde bereits vorstehend bei der Beschreibung des Beispiels 1 angegeben.

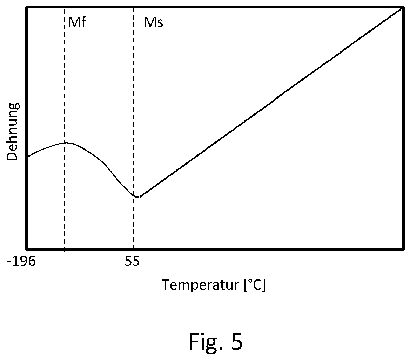

Fig. 5 zeigt in einem Diagramm die Temperatur-Dehnungskurve des Substratmaterials aus Beispiel 1. Neben der thermischen Dehnung ist der Sprung der Dehnkurve zum Start der Martensitumwandlung bei Ms = 55 °C zu erkennen. Die größte Volumenexpansion 8 bei der Abkühlung erfährt das Substratmaterial bei der Martensitfinishtemperatur Mf, die beim Substratmaterial aus Beispiel 1 ungefähr bei - 145 °C liegt. LTT-Legierungen zeichnen sich dadurch aus, dass durch Anpassung der Legierungselemente und -zusammensetzung eine Verschiebung hin zu niedrigeren Temperaturen erreicht wird. Durch die Volumenänderung während der Martensitumwandlung werden Druckspannungen induziert, die den thermischen Schrumpfspannungen entgegenwirken (LTT-Effekt) Während dieser Mechanismus beim Verbindungsschweißen zur Reduktion der Schweißeigenspannung benutzt wird indem die Legierungen so angepasst werden, dass die Martensitumwandlung bei Raumtemperatur abgeschlossen ist, so wird erfindungsgemäß die Martensitumwandlung und die damit einhergehende Volumenexpansion 8 dazu verwendet Druckspannungen in der Grenzfläche 6 vom Substrat 1 zum darauf aufgebrachten Bauteil 3 zu induzieren und so eine zumindest deutlich erleichterte Trennung zu ermöglichen.

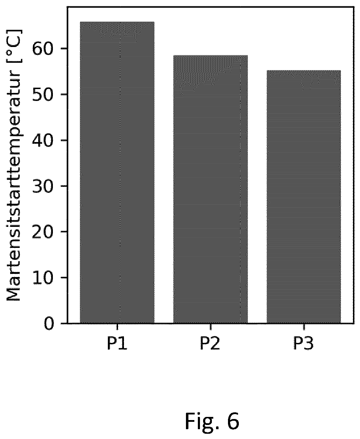

Die Figur 6 zeigt in einem Balkendiagram die ermittelten Martensitstarttemperaturen Ms zu den in den Messclustern P1, P2 und P3 ermittelten chemischen Zusammensetzungen der Substratplatte 1 aus Beispiel 1.

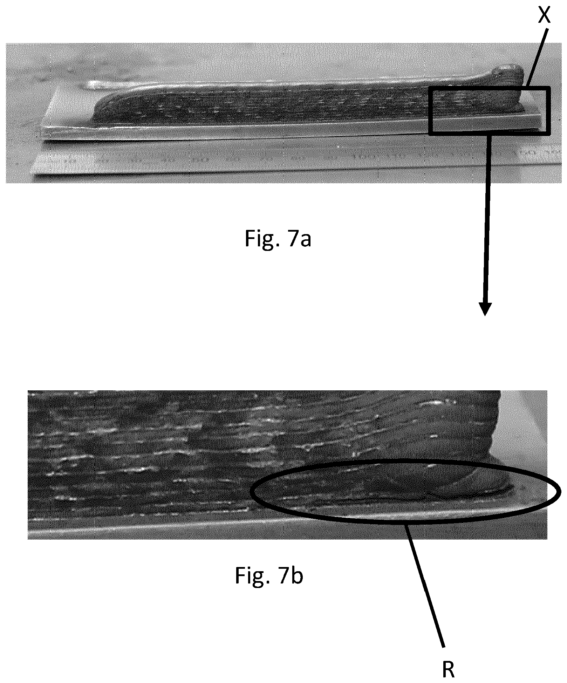

Die Figur 7a zeigt eine fotografische Abbildung des Bauteil-Substrat-Verbunds 8 aus Beispiel 1 nach dem Abkühlen in flüssigem Stickstoff mit einer Haltezeit von 5 Minuten. Während vor dem Abkühlen festgestellt wurde, dass keinerlei Werkstofftrennung zwischen Bauteil 3 und Substrat 1 vorliegt, wurde nach dem Abschrecken des Bauteil-Substrat-Verbunds 8 eine deutliche Werkstofftrennung im markierten Randbereich X beobachtet werden, welche sich über ca. 25 % der Probenlänge erstreckt.

Die Figur 7b zeigt die Vergrößerung des in Fig. 7a markierten Bereichs X des Bauteil-Substrat-Verbunds 8, in dem deutlich die Rissbildung und damit die teilweise Trennung des Bauteils 3 vom Substrat 1 zu erkennen ist.

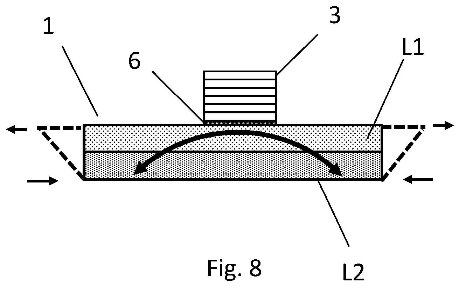

Fig. 8 zeigt schematisch eine bevorzugte Ausgestaltung mit einem Multi-Material-Substrat. In dieser bevorzugten Ausgestaltung ist das Substrat 1 aus mindestens zwei-Lagen L1, L2 aus verschiedenem metallischen Substratmaterialien ausgebildet, die im Wesentlichen parallel zur Aufbaufläche 5 übereinander angeordnet sind, wobei das Substratmaterial der Lage L1 die die Aufbaufläche 5 umfasst (Oberseite) oder die näher zur Aufbaufläche 5 angeordnet ist, jeweils eine höhere Martensitstarttemperatur Ms aufweist, als das Substratmaterial der darunter angeordneten Lage.L2 Die erste Lage L1 die die Aufbaufläche 5 umfasst, kann beispielsweise eine Martensitstarttemperatur Ms von beispielsweise Ms = 20 °C aufweisen und die darunter angeordnete Lage L2, die weiter von der Aufbaufläche 6 entfernt ist, eine Martensitstarttemperatur Ms von >>0 °C. In einer solchen Multi-Material-Substratplatte wird dem Verformungseffekt bei der Abkühlung eine Vorzugsrichtung gegeben, die die Trennung von dem aufgebauten Bauteil 3 noch weiter erleichtert. Die Vorzugsrichtungen die sich durch die dargestellte, bei gleicher Temperatur unterschiedlich ausgeprägte Volumenexpansion 8 (gestrichelt dargestellt) der Lagen L1 und L2 ergeben, sind mit Hilfe der eingezeichneten Pfeile schematisch dargestellt.

Die Erfindung beschreibt die Nutzung des Volumenexpansionseffekts einer martensitischen Phasenumwandlung eines Substrats, beispielsweise in einer Substratplatte, die aus einer LTT-Legierung ausgebildet ist, in einem Verfahren zur additiven Fertigung eines Bauteils zur deutlich vereinfachten Trennung des Bauteils vom Substrat. Die chemische Zusammensetzung und der Aufbau des Substrats werden dabei so eingestellt, dass eine martensitische Phasenumwandlung unterhalb der Fertigungstemperatur während des additiven Aufbaus des Bauteils erfolgt. So kann erfindungsgemäß ein Bauteil schichtweise auf die erfindungsgemäße Substratplatte aufgebaut werden, und nach dem abgeschlossenen Aufbau des Bauteils zumindest die Substratplatte auf eine Temperatur gekühlt werden, die deren Martensitumwandlung und die damit einhergehende Volumenexpansion hervorruft. Durch die Volumenexpansion der Substratplatte entstehen Druckspannungen in der Grenzfläche zwischen Bauteil und Substratplatte, die ein erleichtertes oder sogar selbstständiges Ablösen des Bauteils von der Substratplatte ermöglichen. Eine aufwändige subtraktive Entfernung des Substrats ist nicht mehr erforderlich. Dies bedeutet insbesondere auch für eine industrielle Serienfertigung eine deutliche Zeit- und Kostenersparnis im Fertigungsprozess. Das Substrat, also beispielsweise eine Substratplatte, kann darüber hinaus nach geringfügiger Nachbearbeitung, beispielsweise durch oberflächliches Schleifen oder Fräsen wiederverwendet werden, wodurch sich weitere Möglichkeiten der Kostenersparnis ergeben.

Bezugszeichenliste

| 1 | Substrat (1a Rohling des Substrats) |
| 2 | Druckkopf /Schweißbrenner |
| 3 | Bauteil |
| 4 | Werkstofflagen |
| 5 | Aufbaufläche des Substrats |
| 6 | Grenzfläche |
| 7 | Bauteil-Substrat-Verbund |
| 8 | Volumenexpansion |
| 9 | Lichtbogen |
| 10 | Schmelzbad |
| 11 | Basis (Substratplatte zum Substrataufbau) |
| 12 | Fräse (Werkzeug zur spanenden Bearbeitung) |
| TF | Fertigungstemperatur |
| Ms | Martensitstarttemperatur |
| Mf | Martensitfinishtemperatur |
| P1,P2,P3 | Messcluster für die OES Analyse |
| D1 | Schweißzusatz (beispielsweise Kaltdraht) |
| D2 | Schweißzusatz (beispielsweise abschmelzende Elektrode) |
| D | Schweißdraht /Schweißzusatz |
| SR | Schweißrichtung |
| R | Randbereich mit Rissbildung |
| L1 | Material-Lage |
| L2 | Material Lage |

Patentansprüche

1. Verfahren zur additiven Fertigung eines Bauteils (3) bei einer Fertigungstemperatur $T_F$, aufweisend die Schritte

• Bereitstellen mindestens eines Substrats (1), insbesondere einer Substratplatte, wobei das Substrat (1) aus einem oder mehreren metallischen Substratmaterialien ausgebildet ist oder ausgebildet wird, welches eine Low Transformation Temperature (LTT)-Legierung ist, wobei die LTT-Legierung eine nach der Formel

$$M_s(^{\circ}C) = 561 - 474 * C - 33 * Mn - 17 * Ni - 17 * Cr - 21 * Mo$$

Wobei:

C = Massen-% Kohlenstoff
Mn = Massen-% Mangan
Ni = Massen-% Nickel
Cr = Massen-% Chrom
Mo = Massen-% Mobybdän

von Steven und Haynes berechnete Martensitstarttemperatur Ms unterhalb von 140 °C aufweist und die Martensitstarttemperatur Ms unterhalb der Fertigungstemperatur $T_F$ liegt, und weiterhin die LTT-Legierung ein Legierungssystem auf Basis der Hauptlegierungselemente Eisen-Chrom-Nickel oder Eisen-Mangan ist,
• Aufbau des Bauteils (3) auf einer Aufbaufläche (5) des Substrats (1), durch schichtweises Auftragen mindestens eines Werkstoffs bei einer Fertigungstemperatur $T_F$ unter Ausbildung eines Bauteil-Substrat-Verbunds (7) über eine Grenzfläche (6),
• Abkühlen mindestens des Substrats (1) im Bauteil-Substrat-Verbund (7) nach dem vollständigen Aufbau des Bauteils (3) auf eine Temperatur unterhalb der Martensitstarttemperatur Ms, wobei durch eine Martensitumwandlung und einhergehende Volumenexpansion des metallischen Substratmaterials mindestens in der Grenzfläche (6) zum Bauteil (3) eine Umwandlungsspannung im Substrat (1) induziert wird.
• Trennen des Bauteils (3) vom Substrat (1).

2. Verfahren nach Anspruch 1 **dadurch gekennzeichnet, dass** das Bereitstellen des Substrats (1) eine Metalldraht-basierte additive Fertigung mittels Laserstrahlen, Elektronenstrahlen oder Lichtbogen, bevorzugt ein Lichtbogendrahtauftragsschweißen (WAAM), umfasst.

3. Verfahren nach Anspruch 1 oder 2, **dadurch gekennzeichnet, dass** das Bereitstellen des Substrats (1) ein Lichtbogendrahtauftragsschweißen mit einer Mehrdrahtzufuhr und /oder ein in situ Legieren umfasst.

4. Verfahren nach einem der Ansprüche 1 bis 3 **dadurch gekennzeichnet, dass** das Substratmaterial eine nach der Formel von Steven und Haynes berechnete Martensitstarttemperatur Ms von unterhalb 130 °C, bevorzugt unter 100 °C, besonders bevorzugt unterhalb 70 °C aufweist.

5. Verfahren nach einem der Ansprüche 1 bis 4, **dadurch gekennzeichnet, dass** das Abkühlen des Substrats (1) im Bauteil-Substrat-Verbund (7) durch Eintauchen in ein Kühlmedium erfolgt.

6. Verfahren nach einem der Ansprüche 1 bis 5, **dadurch gekennzeichnet, dass** das Abkühlen des Substrats (1) im Bauteil-Substrat-Verbund (7) in zwei oder mehr Abkühl-Aufwärmzyklen erfolgt.

7. Verfahren nach einem der Ansprüche 1 bis 6 **dadurch gekennzeichnet, dass** mit dem Abkühlen bereits mindestens teilweise eine Trennung des Bauteils (3) vom Substrat (1) erfolgt.

8. Verfahren nach einem der Ansprüche 1 bis 7 **dadurch gekennzeichnet, dass** das Substrat (1) nach dem Trennen und einer Aufbereitung, wieder in ein Verfahren zur additiven Fertigung eingesetzt wird.

9. Verfahren nach einem der Ansprüche 1 bis 8, **dadurch gekennzeichnet, dass** das Substrat (1) aus einer LTT-Legierung ausgebildet ist, welche eine martensitische Phasenumwandlung unterläuft und eine nach der Formel von Steven und Haynes berechnete Martensitstarttemperatur Ms unterhalb von 100 °C, bevorzugt unterhalb von 70 °C aufweist.

10. Verfahren nach einem der Ansprüche 1 bis 9 **dadurch gekennzeichnet, dass** das Substrat aus mindestens zwei unterschiedlichen metallischen Substratmaterialien ausgebildet ist.

11. Verfahren nach einem der Ansprüche 1 bis 10 **dadurch gekennzeichnet, dass** das Substrat aus mindestens zwei Lagen (L1, L2) aus verschiedenem metallischen Substratmaterial ausgebildet ist, die im Wesentlichen parallel zur Aufbaufläche (6) flächig übereinander angeordnet sind, wobei das Substratmaterial der Lage (L1), die die Aufbaufläche (5) umfasst oder die näher zur Aufbaufläche (6) angeordnet ist, jeweils eine höhere Martensitstarttemperatur Ms aufweist, als das Substratmaterial der darunter angeordneten Lage (L2).

12. Verfahren nach einem der Ansprüche 1 bis 11 **dadurch gekennzeichnet, dass** das Substrat in der Aufbaufläche (5) ausgebildete Sprödphasen im Substratmaterial aufweist.

**Claims**

1. A method for the additive manufacturing of a component (3) at a manufacturing temperature $T_F$, having the steps of

   • providing at least one substrate (1), in particular a substrate plate, wherein the substrate (1) is formed or will be formed from one or several metallic substrate materials, which is a low transformation temperature (LTT) alloy, wherein the LTT alloy has a martensite start temperature Ms of below 140°C, which is calculated according to the formula

   $$M_s(^{\circ}C) = 561 - 474*C - 33*Mn - 17*Ni - 17*Cr - 21*Mo$$

   whereby: C = percentage by mass of carbon
   Mn = percentage by mass of manganese
   Ni = percentage by mass of nickel
   Cr = percentage by mass of chrome
   Mo = percentage by mass of molybdenum
   by Steven and Haynes and the martensite start temperature Ms lies below the manufacturing temperature $T_F$, and the LTT alloy furthermore is an alloy system on the basis of the main alloying elements iron-chrome-nickel or iron-manganese,

   • construction of the component (3) on a construction surface (5) of the substrate (1) by layered application of at least one material at a manufacturing temperature $T_F$ by forming a component-substrate composite (7) via a boundary surface (6),
   • cooling down at least the substrate (1) in the component-substrate composite (7) after the complete construction of the component (3) to a temperature below the martensite start temperature Ms, wherein, as a result of a martensite transformation and associated volume expansion of the metallic substrate material, a transformation stress is induced in the substrate (1) at least in the boundary surface (6) to the component (3).
   • Separating the component (3) from the substrate (1).

2. The method according to claim 1, **characterized in that** the provision of the substrate (1) comprises a metal wire-based additive manufacturing by means of laser beams, electron beams or arcs, preferably a wire arc additive manufacturing (WAAM).

3. The method according to claim 1 or 2, **characterized in that** the provision of the substrate (1) comprises a wire arc additive manufacturing with a multi-wire supply and /or an in situ alloying.

4. The method according to one of claims 1 to 3, **characterized in that** the substrate material has a martensite start temperature Ms of below 130 °C, preferably below 100 °C, particularly preferably below 70°C, which is calculated according to the formula by Steven and Haynes.

5. The method according to one of claims 1 to 4, **characterized in that** the cool-down of the substrate (1) in the component-substrate composite (7) takes place by immersion into a cooling medium.

6. The method according to one of claims 1 to 5, **characterized in that** the cool-down of the substrate (1) in the component-substrate composite (7) takes place in two or more cool-down/heat-up cycles.

7. The method according to one of claims 1 to 6, **characterized in that** a separation of the component (3) from the substrate (1) already takes place at least partially with the cool-down.

8. The method according to one of claims 1 to 7, **characterized in that** the substrate (1) is used in a method for the additive manufacturing again after the separation and a treatment.

9. The method according to one of claims 1 to 8, **characterized in that** the substrate (1) is formed from an LTT alloy, which undergoes a martensitic phase transformation and has a martensite start temperature Ms of below 100 °C, preferably of below 70°C, which is calculated according to the formula by Steven and Haynes.

10. The method according to one of claims 1 to 9, **characterized in that** the substrate (1) is formed from at least two different metallic substrate materials.

11. The method according to one of claims 1 to 10, **characterized in that** the substrate is formed from at least two layers (L1, L2) of different metallic substrate material, which are arranged flat one on top of the other essentially parallel to the construction surface (5), wherein the substrate material of the layer (L1), which comprises the construction surface (5) or which is arranged closer to the construction surface (5), in each case has a higher martensite start temperature Ms than the substrate material of the layer (L2) arranged there below.

12. The method according to one of claims 1 to 11, **characterized in that** the substrate has brittle phases, which are formed in the construction surface (5), in the substrate material.


**Revendications**

1. Procédé de fabrication additive d'un composant (3) à une température de fabrication $T_F$, comportant les étapes de

   • préparation d'au moins un substrat (1), en particulier d'une plaque de substrat, sachant que le substrat (1) est ou sera constitué d'un ou plusieurs matériaux de substrat métalliques, lequel est un alliage élaboré à basse température de transformation (BTT), sachant que l'alliage BTT comporte une température de démarrage de martensite *Ms* calculée selon la formule de Steven et Haynes inférieure à 140 °C

   $$M_s(°C) = 561 - 474*C - 33*Mn - 17*Ni - 17*Cr - 21*Mo$$

   sachant que :

   C = %/masse carbone
   *Mn* = %/masse maganèse
   *Ni* = %/masse nickel
   Cr = %/masse chrome
   Mo = %/masse molybdène

   et la température de démarrage de martensite *Ms* se situe en dessous de la température de fabrication $T_F$ et en plus l'alliage BTT est un système d'alliage à base d'éléments d'alliage principaux Fer-chrome-nickel ou Fer-manganèse,
   • configuration du composant (3) sur une surface de configuration (5) du substrat (1) par application par couches d'au moins un matériau à une température de fabrication $T_F$ en constituant un composite composant-substrat (7) sur une surface limite (6),
   • refroidissement au moins du substrat (1) dans le composite composant-substrat (7) après configuration complète du composant (3) à une température inférieure à la température de démarrage de martensite *Ms,* sachant qu'une tension induite par transformation est induite dans le substrat (1) au moins dans la surface limite (6) au composant (3) par une transformation de martensite et une expansion de volume se produisant du matériau de substrat métallique,
   • séparation du composant (3) du substrat (1).

2. Procédé selon la revendication 1, *caractérisé en* ce que la préparation du substrat (1) comprend une fabrication additive à base de fil métallique au moyen de rayons laser, de faisceaux électroniques ou à l'arc, de préférence une fabrication additive arc-fil (FAAP).

3. Procédé selon la revendication 1 ou 2, *caractérisé en* ce que la préparation du substrat (1) comprend une fabrication additive arc-fil avec un apport de fil multiple et/ou un alliage in situ.

4. Procédé selon l'une quelconque des revendications 1 à *3, caractérisé en* ce que le matériau de substrat comporte une température de démarrage de martensite *Ms* calculée selon la formule de Steven et Haynes inférieure à 130 °C, de préférence inférieure à 100 °C, en particulier de préférence inférieure à 70 °C.

5. Procédé selon l'une quelconque des revendications 1 à *4, caractérisé en* ce que le refroidissement du substrat (1) dans le composite composant-substrat (7) a lieu par immersion dans un milieu réfrigérant.

6. Procédé selon l'une quelconque des revendications 1 à *5, caractérisé en* ce que le refroidissement du substrat (1) dans le composite composant-substrat (7) a lieu en deux cycles refroidissement-réchauffement ou plus.

7. Procédé selon l'une quelconque des revendications 1 à *6, caractérisé en* ce qu'une séparation du composant (3) du substrat (1) a lieu déjà au moins en partie avec le refroidissement.

8. Procédé selon l'une quelconque des revendications 1 à *7, caractérisé en* ce que le substrat (1) est à nouveau introduit dans un procédé de fabrication additive après la séparation et une préparation.

9. Procédé selon l'une quelconque des revendications 1 à *8, caractérisé en* ce que le substrat (1) est constitué d'un alliage élaboré à basse température de transformation (BTT), lequel contourne une transformation de phase martensitique et comporte une température de démarrage de martensite **Ms** calculée selon la formule de Steven et Haynes inférieure à 100 °C, de préférence inférieure à 70 °C.

10. Procédé selon l'une quelconque des revendications 1 à *9, caractérisé en* ce que le substrat est constitué d'au moins deux matériaux de substrat métalliques différents.

11. Procédé selon l'une quelconque des revendications 1 à *10, caractérisé en ce que* le substrat est constitué d'au moins deux couches (L1, L2) d'un matériau de substrat métallique différent, qui sont disposées l'une sur l'autre en surface pour l'essentiel parallèlement à la surface de configuration (6), sachant que le matériau de substrat de la couche (L1), qui comprend la surface de configuration (5) ou qui est disposée plus près de la surface de configuration (6), comporte respectivement une température de démarrage de martensite *Ms* plus élevée que le matériau de substrat de la couche disposée en dessous (L2).

12. Procédé selon l'une quelconque des revendications 1 à *11, caractérisé en ce* que le substrat comporte des phases de fragilité dans le matériau de substrat constituées dans la surface de configuration (5).

Fig. 1a

Fig. 1b

Fig. 1c

Fig. 2

Fig. 3a

Fig. 3b

Fig 4a

Fig. 4b

Fig. 5

Fig. 6

X

Fig. 7a

Fig. 7b

R

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 201901600595 A1
- DE 102019115770 A1
- US 20180272609 A1
- US 201901600595 A

**In der Beschreibung aufgeführte Nicht-Patentliteratur**

- **VON KROMM et al.** Properties and weldability of modified Low transformation temperature filler wires. WELDING IN THE WORLD, May 2015, 413-425
- *Characterizing phase transformations of different LTT alloys and their effect on residual stresses and cold cracking*
- **W. STEVEN** ; **A. G. HAYNES**. The Temperature of Formation of Martensite and Bainite in Low-Alloy Steels. *Journal of the Iron and Steel Institute*, 1956, vol. 183 (8), 349-359
- Transactions on Intelligent Welding Manufacturing. Transactions on Intelligent Welding Manufacturing. **PAN Z** ; **DING D.** ; **WU B** ; **CUIURI D** ; **LI H** ; **NORRISH J.** Arc Welding Processes for Additive Manufacturing: A Review. Springer, 2018
- **REISGEN, U** ; **SHARMA, R** ; **OSTER, L**. Plasma Multiwire Technology with Alternating Wire Feed for Tailor-Made Material Properties in Wire and Arc Additive Manufacturing. *Metals*, 2019, vol. 9, 745, https://doi.org/10.3390/met9070745
- **W. STEVEN** ; **A.G. HAYNES**. The temperature of formation of martensit and bainite in low-alloy-steels. *Journal oft he Iron and Steel Institute*, August 1956, vol. 1956, 349-359
- **DIEZ et al.** Materials Behavior and weldability. *Martinez Diez, F.Henry Granjon Prize Competition 2007 Winner*
- Development of a Compressive Residual Stress Field Around a Weld Toe by Means of Phase Transfomations. *Weld World*, 2008, vol. 52, 63-78